**Europäisches Patentamt**

**European Patent Office**

**Office européen des brevets**

(19)

(11) Publication number : **0 495 664 A1**

## (12) EUROPEAN PATENT APPLICATION

(21) Application number : **92300393.3**

(22) Date of filing : **16.01.92**

(51) Int. Cl.⁵ : **B60J 7/04**

(30) Priority : **16.01.91 GB 9100960**
**26.06.91 GB 9113770**

(43) Date of publication of application :
**22.07.92 Bulletin 92/30**

(84) Designated Contracting States :
**DE DK ES FR GB IT NL**

(71) Applicant : **Robinson, Christian Seaton**
**The Cornish Candy Shoppe, Fore Street**
**Looe, Cornwall PL13 1AD (GB)**

(72) Inventor : **Robinson, Christian Seaton**
**The Cornish Candy Shoppe, Fore Street**
**Looe, Cornwall PL13 1AD (GB)**

(74) Representative : **Harrison, Ivor Stanley**
**Withers & Rogers 4 Dyer's Building Holborn**
**London EC1N 2JT (GB)**

(54) **Vehicle with raisable/lowerable roof.**

(57) The body of a vehicle with a raisable/lower-able roof includes a lower part (11) constituting the floor and an upper part (12) constituting the roof. The upper part (12) can be raised and lowered on rollers (25) relative to the lower part (11) with the assistance of gas springs (20) at the vertical corners of the body and the parts (11, 12) can be locked in a desired relative position by restraint means (24).

FIG 1

EP 0 495 664 A1

This invention relates to vehicles having roofs which are raisable or lowerable to accommodate loads of different sizes.

It is known to provide vehicles such as trailers and vans with roofs which may be raised or lowered for the purpose of adapting to loads of different sizes or volumes, thereby minimising wind drag and the like when loads of small volume are being carried and optimising fuel consumption. However, mechanisms for causing the roof to raise and lower have hitherto contemplated screw jacks, rack and pinions, hydraulic rams and other mechanical arrangements which have been complex by nature and cumbersome in operation, particularly by one person.

According to the present invention, a vehicle body comprises lower and upper parts, the lower part constituting the body floor and the upper part constituting the body roof, the upper part being raisable and lowerable with respect to the lower part, in which the respective lower and upper parts are operatively connected by gas-controlled spring means, restraint means being provided to lock the respective parts at a desired relative position.

The body may be attached to a van or truck chassis or may comprise a trailer.

Preferably, the body lower part has upstanding sides and an upstanding wall at one end and the upper part has sides which depend from the roof and a depending wall at the same end as the lower part end wall, in which the sides of the upper part are spaced apart to a greater extent than the sides of the lower part, whereby the upper part can be raised and lowered with the side walls thereof outside the side walls of the lower part. It is preferred that relative movement between the respective parts is limited such that, at the position of maximum elevation of the upper part, there is a marginal overlap between the upper region of the lower walls and the lower region of the upper walls. Guide means are preferably provided between the respective parts, to maintain them in correct mutual registration while minimising friction therebetween. The respective side walls may be arranged to be clamped together at selected locations, to increase strength and rigidity in use, particularly when travelling at speed or in windy conditions.

The end of the body opposite to the end wall provides access for loading and unloading purposes and is conveniently closable by means of a roller shutter or curtain. The ends of the roller shutter, curtain or other closure means are preferably carried in runners such as inwardly-facing channel members which may be constructed and arranged to be telescopic, in order to accommodate changes in height as the roof is raised or lowered.

Gas-controlled spring means, alternatively referred to as hydrapneumatic rams, comprise a double-acting piston and cylinder in which the piston is formed with a bleed orifice and the cylinder contains an inert gas, generally nitrogen, under pressure. The piston is arranged to have different effective surface areas on each side thereof, whereby there is created a net force acting in one direction, but against which the piston may be moved without the exertion of a large effort.

The restraint means may comprise a mechanical device such as a clamp to lock the respective body parts together, or a ratchet device, or electromagnetic brake means, depending largely on the type of control exercised on the gas-controlled spring means.

It is preferred that, to facilitate one-man operation, the respective body parts are connected together, in addition to the gas-controlled spring means, by one or more flexible inextensible elements which are conveniently of fixed length, whereby the exertion of a pulling force on the or each element in one direction will cause the upper part to be raised relative to the lower part, and a pulling force in the other direction will cause the upper part to be lowered. Preferably, the fixing of the flexible elements, conveniently cables, to the respective body parts is such that the resultant force exerted thereby is substantially symmetrical relative to the body. The pulling force may be manually driven for example by a crank mechanism, or motor-driven. The restraint means may be incorporated with or as part of such manual or motor-powered drive mechanism. Clamping means between the respective upper and lower body side walls may comprise an inwardly-directed pin attached to the upper wall, the pin being received in a cooperating vertical slot formed in the lower wall, the pin including a clamping mechanism to lock the pin to the lower wall at any desired position in the slot.

The guide means between the respective parts may conveniently comprise rolling elements such as wheels, preferably mounted on horizontal axes at the vertical corners of the parts or between the respective sides or ends thereof. For example, the lower region of each respective side and end wall of the upper part may be equipped, near the corner therebetween, with a roller which bears against the corresponding external corner of the lower part, and the upper region of each external vertical corner of the lower part may be equipped with a roller which bears against the corresponding wall of the upper part. Each roller is preferably adapted in the profile of its outer engaging surface to conform to the surface or to a corresponding runner on or channel in the respective other part and against which it is intended to bear, particularly to minimise lateral respective movement at the corners.

Conveniently, the gas-controlled spring means are mounted at respective vertical corners of the vehicle body. As a preferred feature, the profile of the external corners is curved, to enable the vehicle body to present a more aerodynamic shape than would be the case with right angle corners.

Embodiments of the invention will now be described by way of example with reference to the accompanying drawings, of which:

Figure 1 is a perspective diagrammatic view of a vehicle body, excluding wheels and other running gear;

Figures 2 and 3 represent corners of the vehicle body to show respective lower and upper guide means;

Figures 4 and 5 show an alternative arrangement to that of Figure 3;

Figures 6 and 7 show an alternative arrangement to that of Figure 2; and

Figure 8 shows the use of a modified Figure 6/7 arrangement.

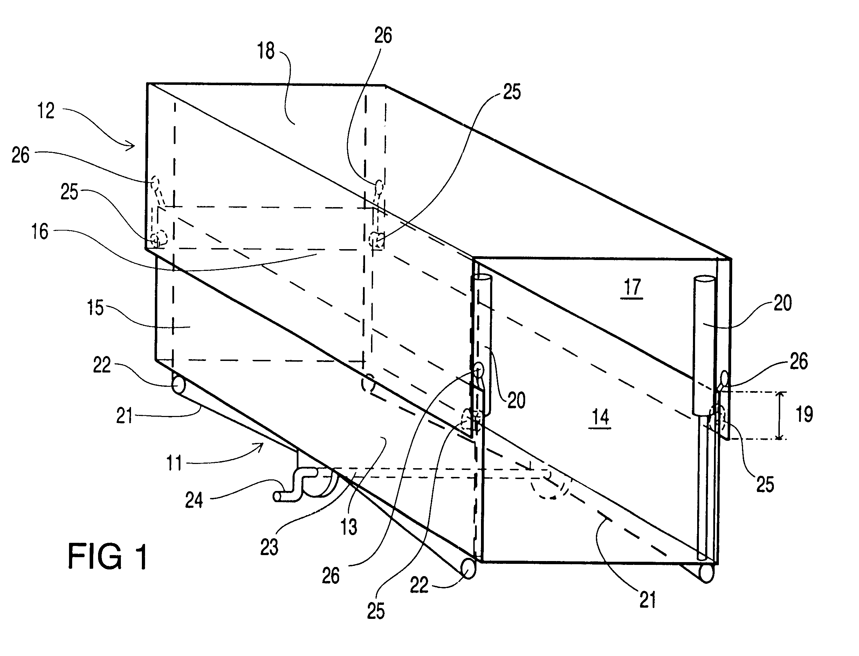

Referring to Figure 1, a vehicle body comprises a lower part 11 and an upper part 12. The lower part has side walls 13, 14 and a front end wall 15; the upper part has side walls 16, 17 and a front end wall 18. The parts are constructed and arranged so that the upper part can be raised and lowered relative to the lower part, the walls of the upper part lying externally of the walls of the lower part. As shown in Figure 1, the upper part is in the fully-raised position, there being a marginal overlap 19 between the parts. A resilient seal (not shown) would be attached to the lower edge region of walls 16-18 to provide for exclusion of rain, dust and the like from the interior of the body through the gap between the respective parts.

Raising and lowering of the upper part is assisted by gas springs 20, mounted at the vertical corners of the body. In order to control the gas springs, cables 21 are connected at each corner to the upper part 12 and are led around pulleys 22 to a winding spool or drum 23 which, as illustrated, is manually operable by a crank handle 24 which may be provided with a pawl and ratchet mechanism (not shown) for restraints. However, the spool or drum may be motor-powered as an alternative. As a further alternative, the cables could be led around further pulleys in the region occupied by the spool or drum mounting brackets, as illustrated, to a motor-driven spool or drum mounted beneath the lower part floor.

The motor may incorporate an integral restraint means including an electro-magnetic device which in the absence of current is biassed to clamp a disc attached to the motor.

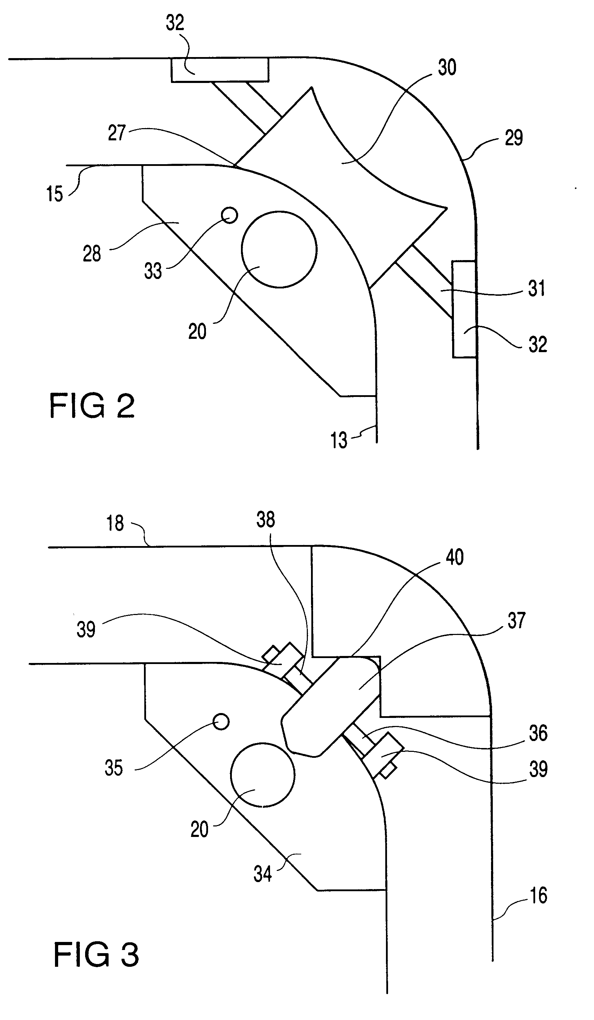

Guide means in the form of roller assemblies are provided as shown at 22 and 23, as more fully explained with reference to Figures 2 and 3.

Referring to Figure 2, which illustrates one form of roller assembly 25, the internal corner 27 formed between side 13 and end 15 of the lower part of the vehicle body is fitted with a support element 28 to which the lower end of a gas spring is mounted. The corresponding corner 29 of the upper part of the vehicle body carries a roller 30 which can rotate on spindle 31 located between support brackets 32. The profile of the roller is adapted to conform to the curvature of the corner of the lower part. A hole 33 is formed in support element 28 to receive cable 21.

Similarly, Figure 3 illustrates another form of roller assembly 26. A support element 34 including a cable-receiving hole 35 is fitted in the internal corner 36, as in Figure 2, and receives the upper end of the gas spring. A wheel 37 is rotatably carried on spindle 38 located between support brackets 39 which are angled upwardly from the top of the corner, whereby the wheel is above the level of the top of the sides of the lower body part. The external surface of the wheel engages a channel recess 40 formed in a corner post in the internal corner between side wall 16 and end wall 18 of the upper vehicle part.

In use and as the upper part is raised and lowered with respect to the lower part, the roller assemblies maintain the parts in the correct registration while providing for substantially friction-free movement.

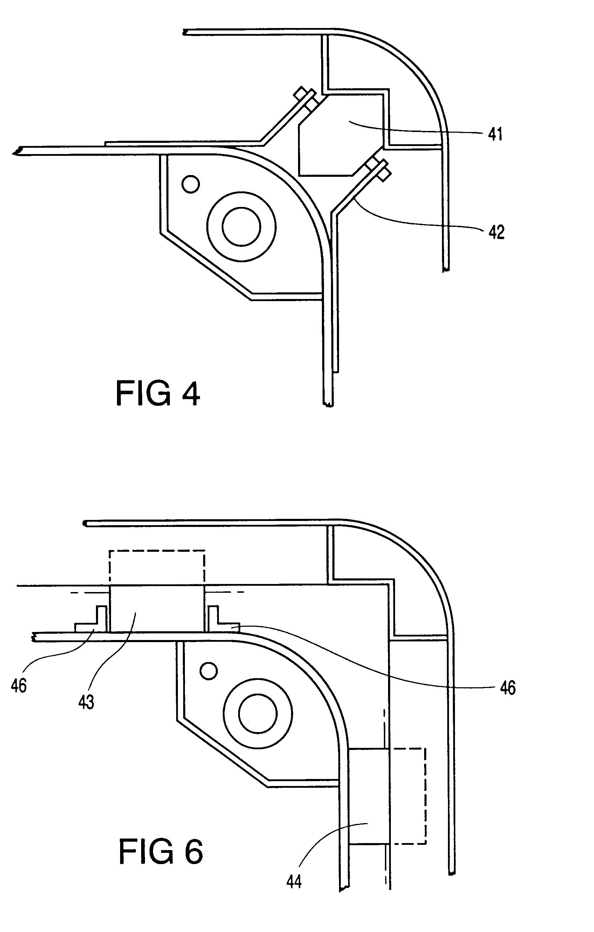

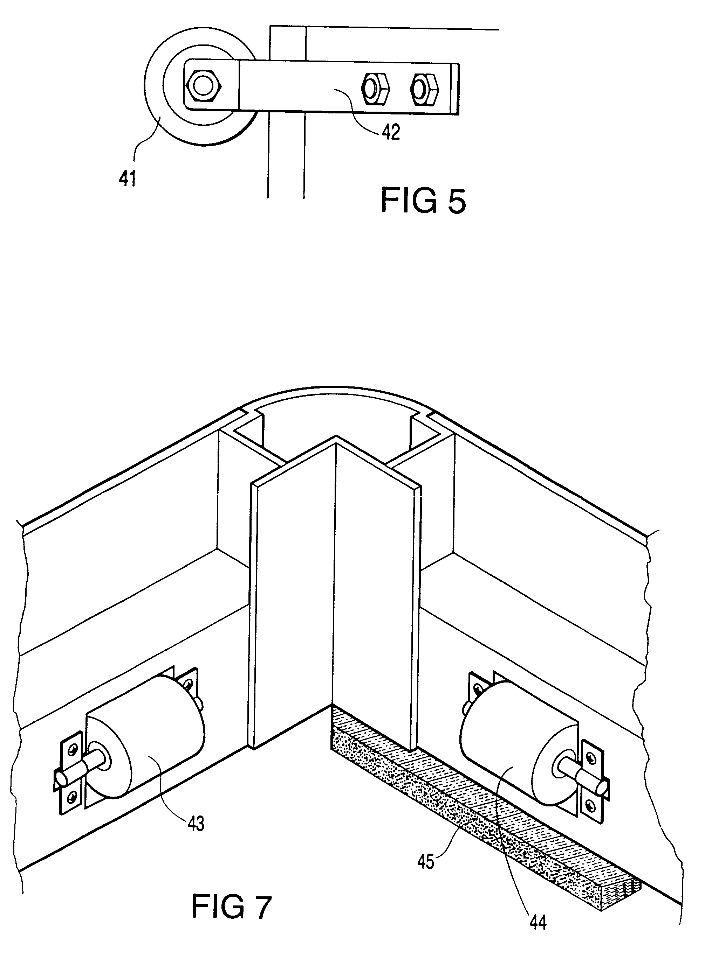

Referring to Figures 4 and 5, an alternative form of roller assembly 26 is shown. In this embodiment, the roller or wheel 41 is journalled in bracket member 42 below the level of the top of the sides of the lower body part. In other respects, the arrangement is similar to that shown in Figure 3.

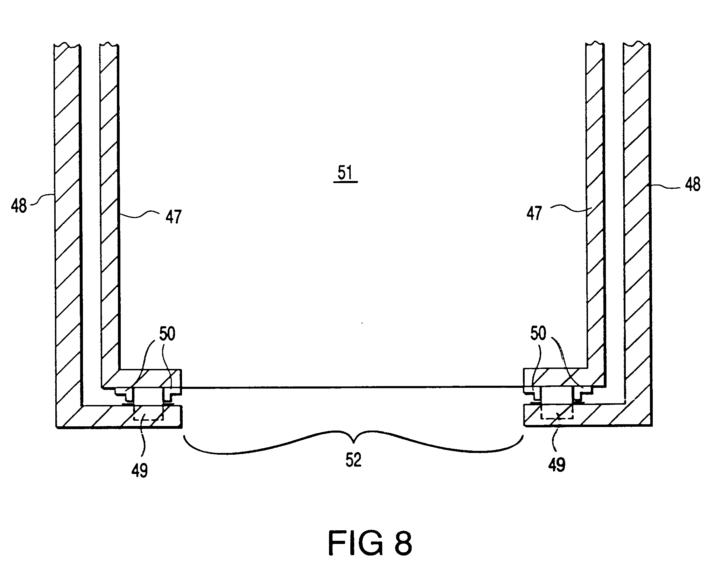

Referring to Figures 6 and 7, an alternative form of roller assembly to that illustrated in Figure 2 is shown. In Figures 6 and 7, rollers 43 and 44 are respectively journalled in the internal side and end walls of the upper body part, to bear against corresponding external walls of the lower part. A brush seal is shown at 45. As a preferred modification to this arrangement, the rollers may run in channels defined by L-section members 46 (see Figure 6) attached to the lower part; more positive engagement between the parts is thereby achieved, since the channel provides lateral support. The other roller (44 in Figures 6 and 7) may then be dispensed with. The use of channels may be particularly advantageous in providing additional support to an open rear upper part, to prevent outward flexing thereof, as shown in Figure 8, which is a cross-sectional plan view of the rear and of a vehicle body. In Figure 8, 47 represents the inner or lower part walls, 48 represents the outer or upper part walls, 49 represents the rollers journalled in recesses in walls 48, and 50 represents the L-section member defining the channels. 51 represents the floor of the vehicle and the gap 52 the rear door aperture.

The invention is particularly, but not exclusively, for use with commercial vehicles up to and including 10 tonnes gross weight.

## Claims

1. A vehicle body comprising a lower part which constitutes the body floor and an upper part which constitutes the body roof, the upper part being raisable and lowerable with respect to the lower part, in which the respective lower and upper parts are operatively connected by gas-controlled spring means and restraint means are provided to lock the respective parts at a desired relative position.

2. A vehicle body according to Claim 1, in which the lower part has upstanding sides and an upstanding wall at one end and the upper part has sides which depend from the roof and a depending wall at the same end as the upstanding end wall of the lower part, and in which the sides of the upper part are spaced apart to a greater extent than the sides of the lower part, whereby the upper part can be raised and lowered with the side walls thereof outside the side walls of the lower part.

3. A vehicle body according to Claim 2, in which the relative movement between the upper and lower parts is limited such that, at the position of maximum elevation of the upper part, there is a marginal overlap between the upper region of the lower walls and the lower region of the upper walls.

4. A vehicle body according to Claim 1, Claim 2 or Claim 3, in which guide means are provided between the upper and lower parts to maintain them in correct manual registration and to minimise friction therebetween.

5. A vehicle body according to any of the preceding claims, in which the end of the body opposite the end wall provides access for loading and unloading purposes and is closable by means of a roller shutter or curtain.

6. A vehicle body according to Claim 5, in which the ends of the roller shutter or curtain are carried in runners which are telescopic in order to accommodate changes in height as the upper part is raised or lowered.

7. A vehicle body according to any of the preceding claims, in which the gas-controlled spring means comprise a double-acting piston and cylinder, the piston being formed with a bleed orifice and the cylinder containing a gas under pressure, and in which the piston has different effective surface areas on each side thereof, whereby there is created a net force acting in one direction but against which the piston may be moved without the exertion of a large effort.

8. A vehicle body according to any of the preceding claims, in which the respective body parts are connected together, in addition to the gas-controlled spring means, by one or more flexible inextensible elements which are of fixed length whereby the exertion of a pulling force on the or each element in one direction will cause the upper part to be raised relative to the lower part and a pulling force in the other direction will cause the upper part to be lowered, the flexible elements being fixed to the respective body parts such that the resultant force exerted thereby is substantially symmetrical relative to the body.

9. A vehicle body according to Claim 8, in which the pulling force is manually driven by a crank mechanism and the restraint means comprise a ratchet device incorporated in the crank mechanism.

10. A vehicle body according to Claim 8, in which the pulling force is motor-driven and the restraint means comprise electromagnetic brake means incorporated in the motor-drive mechanism.

11. A vehicle body according to Claim 4, in which the guide means between the upper and lower parts comprise rollers mounted on horizontal axes respectively at the vertical corners between the lower regions of the side and end walls of the upper part so as to bear against the corresponding external corners of the lower part, and in the upper regions of the external vertical corners of the lower part so as to bear against the corresponding walls of the upper part, the profile of the outer engaging surface of each roller being complementary to the surface of the respective part against which it is intended to bear in order to minimise lateral movement between the ports at the corners.

12. A vehicle body according to any of the preceding claims, in which respective gas-controlled spring means are mounted at each vertical corner of the body.

FIG 1

FIG 2

FIG 3

FIG 4

FIG 6

FIG 5

FIG 7

FIG 8

**European Patent Office**

## EUROPEAN SEARCH REPORT

Application Number

EP 92 30 0393

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 359 910 (VATER)<br>* column 4, line 49 - column 8, line 11; figures * | 1,2,3 | B60J7/04 |
| A | | 10 | |
| A | US-A-2 821 428 (WEBSTER)<br>* column 2, line 10 - column 5, line 24; figures 8,9,10 * | 5,6 | |
| A | US-A-4 887 860 (DOWTY)<br>* abstract; figures * | 7 | |
| A | EP-A-0 168 002 (KREIN)<br>* abstract; figures * | 9 | |
| A | US-A-2 797 124 (HAUPTLI)<br>* column 1, line 45 - column 2, line 50 * | 1 | |
| | | | TECHNICAL FIELDS SEARCHED (Int. Cl.5 )<br><br>B60J<br>B60P<br>B62D |

The present search report has been drawn up for all claims

| Place of search | Date of completion of the search | Examiner |
|---|---|---|
| THE HAGUE | 14 APRIL 1992 | VANNESTE M.A.R. |